(19) Europäisches Patentamt
European Patent Office
Office européen des brevets

(11) **EP 1 361 539 B1**

(12) **FASCICULE DE BREVET EUROPEEN**

(45) Date de publication et mention
de la délivrance du brevet:
**10.02.2010 Bulletin 2010/06**

(51) Int Cl.:
***G06K 19/077*** *(2006.01)*

(21) Numéro de dépôt: **03101197.6**

(22) Date de dépôt: **30.04.2003**

(54) **Dispositif de rayonnement electromagnetique a travers une paroi**

Vorrichtung zur elektromagnetischen Strahlung durch eine Wand

Device for electromagnetic radiation through a wall

(84) Etats contractants désignés:
**AT BE BG CH CY CZ DE DK EE ES FI FR GB GR HU IE IT LI LU MC NL PT RO SE SI SK TR**

(30) Priorité: **06.05.2002 FR 0205632**

(43) Date de publication de la demande:
**12.11.2003 Bulletin 2003/46**

(73) Titulaire: **COMMISSARIAT A L'ENERGIE ATOMIQUE**
**75015 Paris (FR)**

(72) Inventeurs:
• **LOCATELLI, Marcel**
**38330, MONTBONNOT (FR)**
• **THOMAS, Thierry**
**38760, VARCES ALLIERES et RISSET (FR)**

(74) Mandataire: **Ilgart, Jean-Christophe et al Brevalex**
**3, rue du Docteur Lancereaux**
**75008 Paris (FR)**

(56) Documents cités:
**EP-A- 1 111 537       WO-A-01/73675**
**GB-A- 324 228        GB-A- 857 207**
**GB-A- 2 288 103**

**Description**

**DOMAINE TECHNIQUE**

La présente invention concerne la transmission de signaux électromagnétiques, plus particulièrement de signaux radio-fréquence, entre deux dispositifs respectivement placés dans deux milieux distincts, ces milieux étant séparés par une ou des parois, cette ou ces parois étant plus ou moins imperméables aux ondes électromagnétiques.

L'invention s'applique notamment au cas où l'un des dispositifs est placé dans un boîtier dont la conductivité électrique est faible.

**ETAT DE LA TECHNIQUE ANTERIEURE**

GB 2288103A divulgue un système d'émission-réception comportant deux dispositifs placés de part et d'autre d'une paroi. Ce système est pourvu d'un circuit passif constitué de deux antennes qui sont respectivement placées des deux côtés de la paroi et reliées par une ligne électrique appropriée qui traverse la paroi.

Un tel système est valable si la paroi ne perturbe pas le fonctionnement des antennes, ce qui est rarement le cas. En général, la paroi absorbe en partie et/ou perturbe le champ électromagnétique.

En effet, dans la configuration divulguée, la paroi peut représenter une charge pour les antennes, du point de vue électromagnétique, et donc perturber le signal à transmettre. Cela se produit notamment lorsque la conductivité électrique de la paroi est moyenne, en particulier lorsque cette paroi est faite d'un alliage métallique ferreux.

L'efficacité énergétique de la transmission est alors réduite.

De plus, dans certains cas, la paroi peut avoir des caractéristiques électromagnétiques instables dans le temps. Par exemple, elle peut contenir des parties mobiles ou bien elle peut être parcourue par un fluide; sa conductivité électrique peut alors varier et donc conduire à une modification de la charge des antennes, ce qui perturbe la transmission du signal.

Des effets dus à des variations de température (par exemple apparition de courants dans la paroi, variation des propriétés électromagnétiques, de cette dernière) peuvent également perturber cette transmission.

Dans un cas extrême, ces perturbations peuvent altérer la transmission de données pour lesquelles un signal radiofréquence est utilisé comme vecteur, en particulier par modulation d'amplitude, et donc dégrader le rapport signal sur bruit de cette transmission.

GB 857 207 A décrit un conteneur en aluminium ou alliage d'aluminium, destiné aux liquides.

**EXPOSÉ DE L'INVENTION**

La présente invention a pour but de remédier aux inconvénients précédents et donc d'améliorer le circuit passif mentionné plus haut, pour accroître l'efficacité de la transmission du rayonnement électromagnétique à travers la paroi.

Cette invention consiste à rendre la paroi "inactive" vis-à-vis de la transmission du champ électromagnétique. Pour ce faire, on recouvre la paroi d'un matériau formant un écran qui empêche les interactions entre le champ électromagnétique et la paroi.

En effet, un champ électromagnétique, qui pénètre dans une paroi, y crée des sources électromagnétiques induites secondaires, comme par exemple des courants de Foucault et/ou une aimantation secondaire si le matériau est magnétique (c'est-à-dire avec une perméabilité magnétique non négligeable).

Tout d'abord, ces sources induites émettent elles-même un champ électromagnétique secondaire qui modifie le champ électromagnétique initial au voisinage de la paroi. Cette émission pourrait en soi ne pas être gênante si elle était constante dans le temps. Mais en général, les parois ne sont pas optimisées du point de vue électromagnétique mais le sont plutôt, par exemple, pour leur tenue mécanique.

De ce fait, ces parois ont un comportement instable vis-à-vis des champs magnétiques, ce qui implique que les perturbations créées sont instables et ne peuvent donc être "gérées" par l'utilisateur.

Par ailleurs, ces sources induites dissipent de l'énergie du fait de la résistance électrique du matériau et/ou du traînage magnétique. Cette dissipation se fait au détriment de la transmission que l'on cherche à établir par l'intermédiaire du circuit passif.

Pour éviter ces perturbations, on propose d'utiliser un écran entre la paroi et le circuit passif. Cet écran a pour fonction de diminuer et même d'annuler si possible le champ électromagnétique à l'arrière de l'écran (du côté paroi); il n'y a alors plus de création de sources induites dans la paroi.

Ce phénomène connu est dû à l'établissement, dans l'écran, de courants de Foucault qui créent eux-mêmes un champ électromagnétique secondaire qui annule le champ électromagnétique initial à l'arrière de l'écran, si l'écran a une certaine épaisseur.

Pour bénéficier d'une bonne efficacité du système, il faut éviter que les courants de Foucault induits dans l'écran, et nécessaires pour créer l'effet d'écran, ne dissipent trop d'énergie.

Pour ce faire, on propose d'utiliser un matériau qui est très peu résistif, et qui est donc bon conducteur, et dont l'épaisseur est suffisante, cette épaisseur étant par exemple égale à quelques fois l'épaisseur de peau de ce matériau à la fréquence du champ électromagnétique.

Cette épaisseur permet une bonne atténuation du champ électromagnétique dans la paroi et une réduction des pertes d'énergie de type "ri$^2$".

Ce matériau, qui est de préférence choisi parmi les meilleurs conducteurs, peut avantageusement être aussi amagnétique de façon à éviter la création d'une aimantation secondaire au sein de l'écran.

De façon précise, la présente invention a pour objet un dispositif de transmission de rayonnement électromagnétique, en particulier de rayonnement radiofréquence, à travers une paroi, conformément à la revendication 1.

De préférence, la résistivité du matériau est faible, inférieure à 5x10⁻⁸ ohm.mètre.

Selon un mode de réalisation préféré du dispositif objet de l'invention, l'épaisseur du matériau est supérieure à l'épaisseur de peau de la paroi, relative au rayonnement électromagnétique.

L'épaisseur de ce matériau peut être supérieure à deux fois cette épaisseur de peau et inférieure à dix fois celle-ci.

De préférence, l'écran forme une couche sur tout ou partie des surfaces de la paroi en regard des première et deuxième antennes.

En outre, le matériau est de préférence un matériau amagnétique, comme un métal pur, par exemple l'aluminium, le cuivre, l'argent, l'or.

**BRÈVE DESCRIPTION DES DESSINS**

La présente invention sera mieux comprise à la lecture de la description d'exemples de réalisation donnés ci-après, à titre purement indicatif et nullement limitatif, en faisant référence aux dessins annexés, sur lesquels :

- la figure 1 est une vue en coupe schématique d'un mode de réalisation particulier du dispositif objet de l'invention, et
- la figure 2 est une vue en coupe schématique d'un système auquel on applique l'invention.

**EXPOSÉ DÉTAILLÉ DE MODES DE RÉALISATION PARTICULIERS**

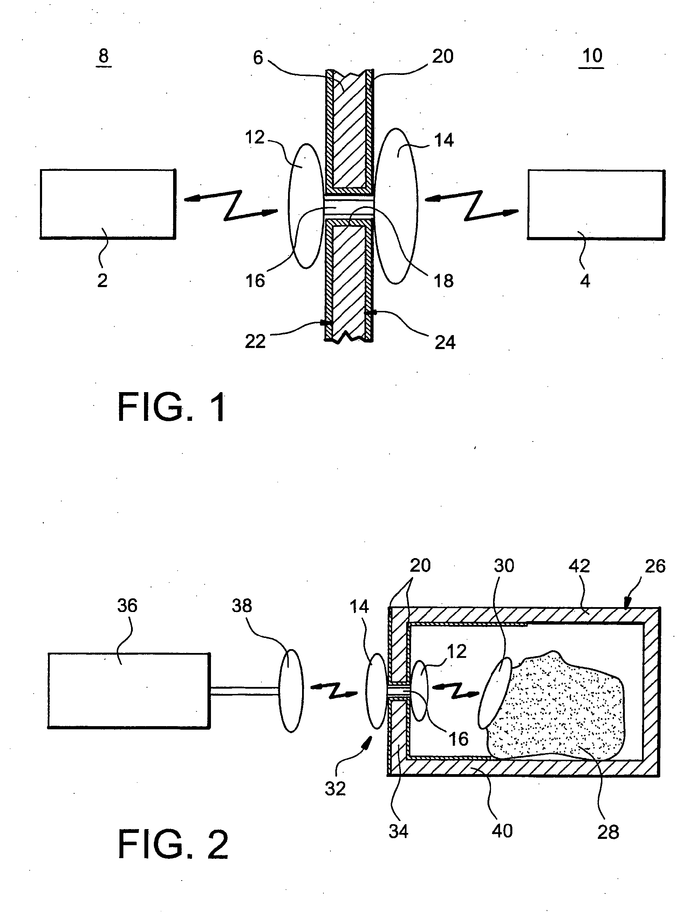

Le dispositif conforme à l'invention, qui est schématiquement représenté sur la figure 1, comprend un émetteur 2 de rayonnement radiofréquence et un récepteur 4 de ce rayonnement radiofréquence.

Une paroi 6 sépare la zone 8, dans laquelle se trouve l'émetteur 2, de la zone 10 dans laquelle se trouve le récepteur 4.

Le dispositif comprend aussi deux antennes 12 et 14, pour coupler électromagnétiquement, de façon passive, l'émetteur 2 et le récepteur 4, ainsi qu'une ligne de liaison électrique 16 entre les antennes 12 et 14.

Cette liaison peut comprendre, de plus, des dispositifs d'adaptation d'impédance entre les antennes et la ligne et éventuellement la mise en résonance des antennes.

Ces antennes 12 et 14 sont respectivement placées de part et d'autre de la paroi 6, l'antenne 12 étant du côté de l'émetteur 2 tandis que l'antenne 14 est du côté du récepteur 4.

La paroi 6 comporte un perçage 18 qui met en communication la zone 8 avec la zone 10. La ligne de liaison électrique 16 traverse ce perçage 18.

Conformément à l'invention, le dispositif de la figure 1 comprend en outre un revêtement 20 qui forme une protection électromagnétique et qui est disposé sur tout ou partie des surfaces de la paroi 6 en regard des antennes 12 et 14.

Dans l'exemple de la figure 1, ce revêtement 20 recouvre la face 22 de la paroi, qui se trouve en regard de l'antenne 12, ainsi que la face 24 de la paroi, qui se trouve en regard de l'antenne 14.

Dans cet exemple, le revêtement recouvre également les parois du perçage 18 mais ce n'est pas indispensable.

Ce revêtement forme une couche qui est faite d'un matériau électriquement conducteur et amagnétique, dont la résistivité est faible, inférieure à 5x10⁻⁸ ohm.mètre, et qui a donc une conductivité électrique élevée.

En recouvrant ainsi la paroi 6 traversée par la ligne de liaison électrique 16, d'un matériau de conductivité électrique élevée pour que la partie imaginaire (réactance) de l'impédance, qui représente la charge créée sur chacune des antennes 12 et 14 par la paroi 6, soit largement supérieure à la partie réelle (résistance) de cette impédance, on limite, ou même on élimine, les effets perturbateurs dus à la paroi 6.

De plus, il est préférable que l'épaisseur du revêtement conducteur et de sa surface soit telle que la charge dissipative (résistance), qui est apportée à chacun des antennes 12 et 14 par l'ensemble paroi-revêtement, soit négligeable par rapport aux charges propres de cette antenne.

Cette charge dissipative est liée à l'existence des courants de Foucault induits dans une paroi électriquement conductrice en présence d'un rayonnement électromagnétique, sur une épaisseur appelée "épaisseur de peau". Cette épaisseur de peau δ est une fonction décroissante de la fréquence f du rayonnement électromagnétique. On a en effet :

$$\delta = 1/(\mu . \sigma . 2\pi . f)$$

où σ représente la conductivité du revêtement et μ la perméabilité magnétique de ce revêtement.

Pour la couche formant le revêtement 20, on choisit une épaisseur comprise entre 2δ et 10δ, par exemple 5δ.

De plus, on choisit un matériau qui a une bonne insensibilité aux variations de température, du point de vue électromagnétique. On utilise par exemple un métal amagnétique pur tel que l'aluminium, le cuivre, l'argent ou l'or.

Dans l'exemple de la figure 1 on peut bien entendu intervertir l'émetteur 2 et le récepteur 4. De plus, on peut mettre en oeuvre l'invention avec deux émetteurs-récepteurs respectivement disposés de part et d'autre de la paroi 6.

En outre, l'invention peut être mise en oeuvre avec d'autres rayonnements électromagnétiques que les rayonnements radiofréquence, par exemple sur un domaine de fréquences plus élevées (supérieures à plusieurs GHz).

L'invention s'applique à tout système de transmission sans fil, en particulier pour permettre des mouvements relatifs entre l'émetteur et le récepteur, pour une liaison gênée par la présence de parois (par exemple dans le cas de l'existence d'une protection mécanique).

L'invention s'applique par exemple au cas d'un conteneur métallique de protection, réalisé à partir d'un alliage de résistance mécanique élevée, ce qui se traduit en général par une faible conductivité électrique, ce conteneur étant amovible et contenant un objet identifié par une étiquette radiofréquence.

Ceci est schématiquement illustré par la figure 2 où l'on voit le conteneur amovible 26 contenant l'objet 28 muni d'une antenne-étiquette radiofréquence 30.

On voit aussi un circuit 32 de couplage passif du genre de celui de la figure 1 et comprenant ainsi les deux antennes 12 et 14 reliées par la ligne 16.

L'antenne 12 est placée dans le conteneur 26 en regard de l'antenne-étiquette 30 et communique avec cette dernière. L'antenne 14 est placée à l'extérieur du conteneur 26. La ligne 16 traverse une paroi 34 de ce conteneur 26.

On voit en outre des moyens d'instrumentation 36 qui sont munis d'une antenne 38 pour communiquer avec l'antenne-étiquette 30 par l'intermédiaire du circuit 32.

Conformément à l'invention, un revêtement 20, du genre de celui dont il est question dans la description de la figure 1, recouvre la face externe de la paroi 34 du conteneur 26, qui se trouve en regard de l'antenne 14, ainsi que la face interne de cette paroi 34, qui se trouve en regard de l'antenne 12.

Dans l'exemple de la figure 2, le revêtement 20 recouvre également une partie des faces internes de deux autres parois 40 et 42 du conteneur 26, qui sont voisines de la paroi 34.

La partie ainsi recouverte de ces faces internes entoure la zone interne du conteneur 26 où se trouvent les antennes 12 et 30.

**Revendications**

1. Dispositif de transmission de rayonnement électromagnétique, en particulier de rayonnement radiofréquence, à travers une paroi (6), qui a des caractéristiques électromagnétiques instables dans le temps et qui est dissipatrice d'énergie, ce dispositif comprenant :

- des premiers moyens (2) pour l'émission et/ou la réception du rayonnement électromagnétique,
- des deuxièmes moyens (4) pour la réception et/ou l'émission du rayonnement électromagnétique, ces deuxièmes moyens étant séparés des premiers moyens par la paroi (6), et
- des moyens (32) de couplage électromagnétique passif entre les premiers et deuxièmes moyens, ces moyens de couplage électromagnétique passif comprenant des première et deuxième antennes (12, 14), qui sont respectivement placées de part et d'autre de la paroi, et des moyens de liaison électrique (16) entre les première et deuxième antennes, ces moyens de liaison électrique traversant la paroi,

ce dispositif étant **caractérisé en ce qu'**il comprend en outre un écran (20) qui empêche les interactions entre le rayonnement électromagnétique et la paroi et qui est disposé sur tout ou partie des surfaces de la paroi en regard des première et deuxième antennes, cet écran (20) étant fait d'un matériau électriquement conducteur.

2. Dispositif selon la revendication 1, dans lequel la résistivité du matériau est faible, inférieure à $5 \times 10^{-8}$ ohm.mètre.

3. Dispositif selon l'une quelconque des revendications 1 et 2, dans lequel l'épaisseur du matériau est supérieure à l'épaisseur de peau relative au rayonnement électromagnétique.

4. Dispositif selon la revendication 3, dans lequel l'épaisseur du matériau est supérieure à deux fois cette épaisseur de peau et inférieure à dix fois celle-ci.

5. Dispositif selon l'une quelconque des revendications 1 à 4, dans lequel l'écran forme une couche (20) sur tout ou partie des surfaces de la paroi en regard des première et deuxième antennes.

6. Dispositif selon l'une quelconque des revendications 1 à 5, dans lequel le matériau est un matériau amagnétique.

7. Dispositif selon la revendication 6, dans lequel le matériau est choisi parmi l'aluminium, le cuivre, l'argent et l'or.

8. Système de transmission sans fil, ce système comprenant le dispositif selon l'une quelconque des revendications 1 à 7 ainsi que ladite paroi (6).

## Claims

**1.** Device for transmission of an electromagnetic radiation, particularly a radio frequency radiation, through a wall (6) which has electromagnetic characteristics that are unstable with time and which dissipates energy, this device comprising:

- first means (2) for transmission and / or reception of said electromagnetic radiation,
- second means (4) for reception and / or transmission of said electromagnetic radiation, these second means being separated from the first means by the wall (6), and
- passive electromagnetic coupling means (32) between the first and second means, these passive electromagnetic coupling means comprising first and second antennas (12, 14) which are placed on each side of the wall respectively, and means of making an electrical connection (16) between the first and second antennas, these electrical connecting means passing through the wall,

this device being **characterized in that** it also comprises a shield (20) which prevents interaction between the electromagnetic radiation and the wall and which is arranged on all or some of the surfaces of the wall facing the first and second antennas, this shield means being made of an electrically conducting material.

**2.** Device according to claim 1, in which the resistivity of the material is low, less than 5 x $10^{-8}$ ohm.meters.

**3.** Device according to claim 1 or 2, in which the thickness of the material is greater than the wall skin depth, with respect to the electromagnetic radiation.

**4.** Device according to claim 3, in which the thickness of the material is more than twice and less than ten times said skin depth.

**5.** Device according to any one of claims 1 to 4, in which the shield forms a layer (20) over all or some of the surfaces of the wall facing the first and second antennas.

**6.** Device according to any one of claims 1 to 5, in which the material is a non-magnetic material.

**7.** Device according to claim 6, in which the material is chosen from among aluminum, copper, silver and gold.

**8.** Wireless transmission system, this system comprising the device according to any one of claims 1 to 7 together with said wall (6).

## Patentansprüche

**1.** Vorrichtung zur Transmission von elektromagnetischer Strahlung, insbesondere Radiofrequenzstrahlung, durch eine Mauer (6) hindurch, die zeitlich instabile elektromagnetische Charakteristika hat und Energie abstrahlt,
wobei diese Vorrichtung umfasst:

- erste Einrichtungen (2) zum Senden und/oder Empfangen von elektromagnetischer Strahlung,
- zweite Einrichtungen (4) zum Senden und/oder Empfangen von elektromagnetischer Strahlung, wobei diese zweiten Einrichtungen von den ersten Einrichtungen durch die Wand (6) getrennt sind, und
- Einrichtungen (32) zur passiven elektromagnetischen Kopplung zwischen den ersten und zweiten Einrichtungen, wobei diese Einrichtungen zur passiven elektromagnetischen Kopplung eine erste und zweite Antenne (12, 14), beiderseits der Wand angeordnet, und elektrische Verbindungseinrichtungen (16) zwischen der ersten und zweiten Antenne umfassen, wobei diese elektrischen Verbindungseinrichtungen die Wand durchqueren,

wobei diese Vorrichtung **dadurch gekennzeichnet ist, dass** sie außerdem eine Abschirmung (20) umfasst, die Interaktionen zwischen der elektromagnetischen Strahlung und der Wand verhindert und die über die Gesamtheit oder einen Teil der Oberflächen der Wand gegenüber der ersten und der zweiten Antenne vorgesehen ist, wobei diese Abschirmung (20) aus einem elektrisch leitenden Material gemacht ist.

**2.** Vorrichtung nach Anspruch 1, bei der die Resitivität des Materials gering ist, unter 5x$10^{-8}$ Ohm.Meter.

**3.** Vorrichtung nach einem der Ansprüche 1 und 2, bei der die Dicke des Materials größer ist als die Hautdicke relativ zur elektromagnetischen Strahlung.

**4.** Vorrichtung nach Anspruch 3, bei der die Dicke des Materials größer ist als das Zweifache dieser Hautdicke und kleiner als das Zehnfache von ihr.

**5.** Vorrichtung nach einem der Ansprüche 1 bis 4, bei der die Abschirmung eine Schicht (20) bildet, über die Gesamtheit oder einen Teil der Oberflächen der Wand gegenüber der ersten und der zweiten Antenne.

**6.** Vorrichtung nach einem der Ansprüche 1 bis 5, bei der das Material ein unmagnetisches Material ist.

**7.** Vorrichtung nach Anspruch 6, bei dem das Material ausgewählt wird unter Aluminium, Kupfer, Silber und Gold.

8.  Drahtloses Transmissionssystem, wobei dieses System die Vorrichtung nach einem der Ansprüche 1 bis 7 sowie die genannte Wand (6) umfasst.

FIG. 1

FIG. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2288103 A

- GB 857207 A